Europäisches Patentamt

European Patent Office

Office européen des brevets

(11) Publication number: **0 220 843**
**A2**

(12) # EUROPEAN PATENT APPLICATION

(21) Application number: **86307526.3**

(22) Date of filing: **01.10.86**

(51) Int. Cl.4: **F16C 11/06**

(30) Priority: **23.10.85 US 790434**
**01.08.86 US 891625**

(43) Date of publication of application:
**06.05.87 Bulletin 87/19**

(84) Designated Contracting States:
**DE GB**

(71) Applicant: **GENERAL MOTORS CORPORATION**
**General Motors Building 3044 West Grand**
**Boulevard**
**Detroit Michigan 48202(US)**

(72) Inventor: **Weber, Frederick C.**
**4184 Pleasonton Road**
**Englewood Ohio 45322(US)**

(74) Representative: **Breakwell, John Neil Bower et**
**al**
**GM Patent Section Vauxhall Motors Limited**
**Luton Office (F6) P.O. Box No. 3 Kimpton**
**Road**
**Luton Bedfordshire LU2 OSY(GB)**

(54) **Ball joint.**

(57) A ball joint of the type having a ball stud (12) and
a preformed plastics socket (20) includes means for
sealing the socket opening (32) receiving the stud
head, and for ensuring maintenance of the seal
irrespective of accumulated tolerance variations.

A cap (38) having an inwardly converging pe-
ripheral closure surface (44) fits within and conforms
closely to a matching closure surface (36) within the
socket opening. Deformable protuberances (52;94)
on the outer side of the cap (38;82) are arranged to
be engaged and deformed by a surface (56) of a
suspension control arm (54) to which the socket is
mounted, or alternatively by a surface (100) of a
cover (98) which fixes the socket (68) to the control
arm (96).

The protuberances extend far enough from the
outer side of the cap to ensure that the engagement
and deformation occur irrespective of accumulated
tolerance variations in the components of the ball
joint. The deformation of the protuberances forces
the cap into the socket opening as the ball joint is
completed, to interengage the closure surfaces more
tightly and ensure maintenance of the seal of the
socket opening.

Fig. 1

# BALL JOINT

This invention relates to ball joints, for example as used in automotive vehicles, as specified in the preamble of claim I, for example as disclosed in US-A-3 833 309.

Ball joints are found in automotive vehicles in two common applications, namely in steering linkages, between a tie rod and a steering arm, and in vehicle suspensions, between a suspension control arm and a steering knuckle. In either application, a ball joint generally includes a stud having a spherical head with a shank extending from the head, and a socket having a cavity within which the stud head is supported and turns. For the purpose of illustration, the spherical stud head may be regarded as being divided into two hemispheres, of which the hemisphere from which the shank extends may be termed the shank hemisphere, and the hemisphere opposite the shank may be termed the free hemisphere.

It is known to assemble a ball joint by injection-moulding the socket directly around the spherical stud head of the joint. In such a case, a preformed socket cavity is not necessary, because the socket material will automatically form its own cavity in the shape of the outer surface of the stud head during moulding. With injection moulding, the automatically formed cavity will inherently wrap around and provide a bearing seat to support as much of both stud head hemispheres as is desired.

However, it is often preferable that the socket be preformed with a cavity into which the stud may be later inserted, so that the exact shape of the socket and socket cavity may be more closely controlled. In such a case, the stud has to be inserted through an opening into the cavity of the preformed socket in order to assemble the ball joint. The two possible methods of inserting the stud are head-first and shank-first.

Examples of head-first stud insertion may be seen in the US-A-3 309 II7 and US-A-3 355 787. With head-first insertion, only one opening into the socket cavity is strictly necessary, and this opening must be large enough to admit the spherical head of the stud. However, the above US-A-3 309 II7 clearly illustrates a disadvantage with this method of assembly. Specifically, although the preformed socket may easily be moulded to provide a cavity shaped to conform to and support the entire free hemisphere of the stud head, if the socket cavity is to be substantially rigid and still admit the stud head freely, it cannot be moulded with a cavity designed to wrap around and support any substantial portion of the shank hemisphere of the stud head. A ball joint assembled with the head-first method of insertion may therefore not be suitable if the stud is to be subjected to anything but a compression load, that is, anything but a load that forces the stud head into the socket cavity.

There are two known ways, with head-first insertion, of providing a preformed socket with a cavity that also wraps around and supports a substantial portion of the shank hemisphere of the stud head. One way is to mould the socket from a material that will yield significantly as the stud head is inserted, so as to flex past the largest diameter of the stud head and then wrap back around part of the shank hemisphere. Another way is to form part of the socket cavity around the shank hemisphere after the stud head has been inserted, as a subsequent assembly step. US-A-3 226 I42 shows an example of a socket of yieldable material with an opening to the cavity that is smaller than the diameter of the stud head, so that the socket cavity will flex and wrap around part of the shank hemisphere as the socket is forced over the stud head. There would of course be limitations on the rigidity, strength and thickness of such a yieldable socket. In the above US-A-3 355 787, a subsequent cold-forming step is carried out in order to form part of the socket material around the shank hemisphere of the stud head. Although this socket design provides good support to the stud head, it would be desirable to eliminate that assembly step if possible.

Examples of the shank-first method of inserting a stud into a preformed socket cavity may be seen in US-A-3 846 032 and the previously mentioned US-A-3 833 309. With shank-first insertion, there are two opposed openings into the socket cavity, namely a smaller one large enough to admit the stud shank but not the stud head, and a larger one which is large enough to admit the stud head. The socket cavity generally includes a first bearing seat that is disposed adjacent the smaller opening and is engageable with the shank hemisphere of the stud head. The ball joint is assembled by inserting the stud shank-first through the larger opening until the shank hemisphere of the stud head engages the first bearing seat with the stud shank extending through the smaller cavity opening. One of the benefits of a ball joint assembled in this fashion is that support for the shank hemisphere of the stud head may easily be provided by the first bearing seat. The first bearing seat may be preformed and shaped as desired, and no subsequent shaping steps will be necessary. The engagement of the shank hemisphere with the first bearing seat also effectively closes the smaller socket cavity opening, which provides what is termed a travel window for the outwardly extending shank. However, there is the converse problem here of providing support to the free hemisphere of the stud head. Another potential drawback is the larger socket cavity opening, which it is necessary to cover, and which it is desirable to securely seal to retain lubricant around the stud head and keep contaminants out of the socket cavity.

In the ball joint disclosed in the above US-A-3 846 032, the larger opening is covered by means of a lower housing member 4 that is joined to an upper housing member 3 around the outside of the socket I. Also, a separate second bearing seat is provided for the free hemisphere of the stud head. However, the larger opening in the socket I, although covered, is not directly sealed or plugged. In the ball joint disclosed in the above US-A-3 833 309, the larger opening is directly sealed by means of a plug 12, which is secured by sonic welding into the opening. However, there is nothing to back up the securement of the plug 12, which depends entirely on the strength of the sonic weld.

The present invention is concerned with achieving a ball joint that has a novel means for sealing a stud-receiving opening in a socket and for ensuring the maintenance of the resulting seal in spite of accumulated tolerance variations in the ball joint.

To this end, a ball joint in accordance with the present invention is characterised by the features specified in the characterising portion of claim I.

A ball joint in accordance with the invention makes it easy to plug and seal the opening in the ball joint socket after the ball joint stud has been inserted into the cavity, and in doing so to securely back up or assure that plug and seal in a way that also absorbs tolerance variations.

In the ball joint disclosed in the previously mentioned US-A-3 833 309, the peripheral closure surface of a closure plug 12 constituting the cap is straight-sided (that is, cylindrical in form), and correspondingly the closure surface of the cavity is formed by a straight-sided bottom bore II, such that during assembly of the ball joint these opposed surfaces are not forced into tight engagement at all, and there is nothing to back up or assure the seal formed by the closure plug.

Two embodiments will be described of a ball joint in accordance with the invention that has a stud having a head and a shank and also has a preformed socket, the first of these embodiments relating to assembly by the shank-first method and the second embodiment relating to assembly by the head-first method. Each embodiment provides for sealing of the socket cavity opening that is left open after insertion of the stud head into the cavity, as well as ensuring the maintenance of that seal in spite of accumulated tolerance variations in the ball joint.

Each of these embodiments of a ball joint in accordance with the present invention includes a stud having a head and a shank, these comprising a spherical head and a generally cylindrical shank having a diameter smaller than the diameter of the stud head. Each also includes a preformed socket that is moulded from a suitable plastics material and has a cavity adapted to receive the head of the stud.

In the first embodiment, the cavity has opposed first and second openings thereto, the first opening being large enough to admit the shank of the stud but not the head, whereas the second opening is larger, being large enough to admit the stud head. The cavity also includes a closure surface that extends adjacent to and completely around the second opening and converges in the direction of the cavity. In this embodiment the closure surface is a frustoconical surface that defines the second opening and converges in a direction towards the first opening. The socket also includes a first bearing seat that is disposed adjacent the first opening and is engageable with the stud head. Therefore, the stud may be inserted shank-first into the socket cavity through the second opening unti the shank hemisphere of the stud head engages the first bearing seat with the shank extending through the first opening.

The second opening is sealed by means of a cap having opposed inner and outer sides and a peripheral closure surface that extends between the sides and substantially conforms to the shape of the cavity closure surface. As is disclosed in relation to the first embodiment, the cap closure surface is also frustoconical and matches the frustoconical closure surface of the socket cavity. In addition, the inner side of the cap includes a second bearing seat that is engageable with the free hemisphere of the stud head. Therefore, when the stud has been inserted into the cavity, the cap can be inserted inner side-first into the second opening until the matching frustoconical closure surfaces on the cap and socket interengage, and the second bearing seat engages the stud head. This engagement of the conforming closure surfaces serves both to seal the second opening and to establish a preload of the stud head between the first and second bearing seats.

The outer side of the cap also includes a deformable protuberance that extends a predetermined distance therefrom.

The first embodiment of the ball joint also includes a housing member having a surface portion, which, as disclosed, is advantageously provided by a substantially planar surface portion of a suspension member. After the cap has been inserted into the second opening of the socket as described, the ball joint is completed with a suitable cover means adapted to fix the socket to the suspension member so that the outer side of the cap faces the suspension member surface portion. The cover means disclosed is made of stamped metal, and fits over the outside of the socket and is riveted to the suspension member. Accumulated tolerance variations in any or all of the socket, stud, cap and suspension member surface portion may result in the outer side of the cap being spaced by a varying amount from the suspension member surface portion. To accommodate such tolerance variation, the predetermined distance that the deformable protuberance extends from the outer side of the cap is sufficient to ensure that the protuberance will engage the suspension member surface portion, and be deformed by it, as the socket is being riveted to the suspension member. That deformation forces the cap towards the first opening, so in turn forcing the matching frustoconical cavity and cap closure surfaces into tighter interengagement, since they converge towards the first opening. This tighter interengagement of the closure surfaces, in its turn, ensures that the sealing of the second opening is maintained, as well as maintaining the preload of the stud head between the first and second bearing seats.

In the second embodiment, there is only one opening to the socket cavity, and this opening admits the head of the stud. The cavity also includes a frustoconical closure surface disposed adjacent to and completely around the one opening, which converges in a direction into the cavity. The stud may therefore be inserted head-first into the socket cavity through the one opening until the free hemisphere of the stud head engages the inner surface of the socket cavity, with the shank extending out through the one opening.

The one opening in the second embodiment is also sealed by means of a cap having opposed inner and outer sides and a frustoconical peripheral closure surface that extends between the sides and substantially conforms to the cavity closure surface. In addition, the cap of the second embodiment has an opening therethrough that is large enough to admit the stud shank, and is defined by a bearing seat surface engageable with the shank hemisphere of the stud head. Thereby, after the stud has been inserted into the cavity, the cap can be inserted inner side-first into the opening and over the stud shank until there is interengagement of matching frustoconical closure surfaces on the cap and socket, as well as of the bearing seat surface and shank hemisphere of the stud head. The interengagement of these co-operating pairs of surfaces is effective to seal the one opening.

As in the first embodiment, the outer side of the cap also includes a deformable protuberance that extends a predetermined distance from the outer side of the cap.

The second embodiment also includes a housing member provided by a suspension member and a cover means similarly adapted to fit over the socket and to be riveted to the suspension member to complete the ball joint. In the second embodiment, however, the inside of the cover means is provided with a substantially planar surface portion. After the cap has been inserted into the opening of the socket as described, and the ball joint completed, the outer side of the cap faces the surface portion of the cover means, and the deformable protuberances on the cap are crushed against the cover means surface portion, rather than against the surface of the suspension member itself. Therefore, just as in the first embodiment, any accumulated tolerance variations in any or all of the socket, stud, cap, suspension member and surface portion of the cover means which may result in the outer side of the cap being spaced from the cover means by a varying amount are accommodated. Further, again as in the first embodiment, the cap will be forced more tightly into the cavity opening, and the bearing seat on the cap will be forced more tightly against the stud head, which serves to ensure or back up the seal.

The invention thereby makes it possible, in a ball joint of the type having a stud with a head and a socket with a cavity, to provide for sealing of a stud head-receiving opening to the cavity by a means that ensures tight sealing of the opening while accounting for such tolerance variations in the various components of the ball joint as accumulate when the ball joint is being assembled.

In accordance with a preferred feature of the invention, such sealing is accomplished by providing the opening to the socket cavity with a closure surface that is disposed adjacent to and completely around the opening and converges in a direction into the cavity, and by providing a cap for the opening having opposed inner and outer sides with a peripheral closure surface extending between the inner and outer sides that substantially conforms to the cavity closure surface, so that the cap may be inserted inner side-first into the opening after the stud has been inserted into the cavity, to thereby interengage the cap and cavity closure surfaces to seal the opening, and also providing at least one deformable protuberance that extends a predetermined distance from the outer side of the cap so that when the socket, the received stud and the inserted cap are together fixed by the use of a suitable cover means to a housing member provided by a suspension member having a surface portion, with the outer side of the cap facing either the surface portion of the suspension member or a surface of the cover means, that predetermined distance will be sufficient to ensure that the protuberance engages and is deformed by the surface that the outer side of the cap faces, regardless of any accumulated tolerance variations in the various components that may result in the outer side of the cap being spaced by a varying amount from the surface portion that it faces, thereby ensuring that the cap is forced into the opening to ensure maintenance of the seal.

In accordance with a further preferred feature of the invention, the cap and the cavity opening are provided with matching frustoconical surfaces and the socket cavity and cap are provided with bearing seats, so that the deformation of the protuberance on the cap as the socket is fixed to the suspension member by the cover means acts to force the matching frustoconical surfaces more tightly together to both ensure the seal and also maintain a preload of the stud head between the bearing seats.

In the drawings:

Figure 1 is a partially exploded fragmentary view of a first embodiment of a ball joint in accordance with the present invention, showing some of the structural elements in section;

Figure 2 is a view similar to Figure 1, but showing the structural elements assembled;

Figure 3 is an enlarged view of a portion of Figure 2, showing some details of the ball joint;

Figure 4 is a view similar to Figure 1, but of a second embodiment of a ball joint in accordance with the invention;

Figure 5 is a view similar to Figure 2, but of the second embodiment of a ball joint in accordance with the invention; and

Figure 6 is a view similar to Figure 3, but again of the second embodiment of a ball joint in accordance with the invention.

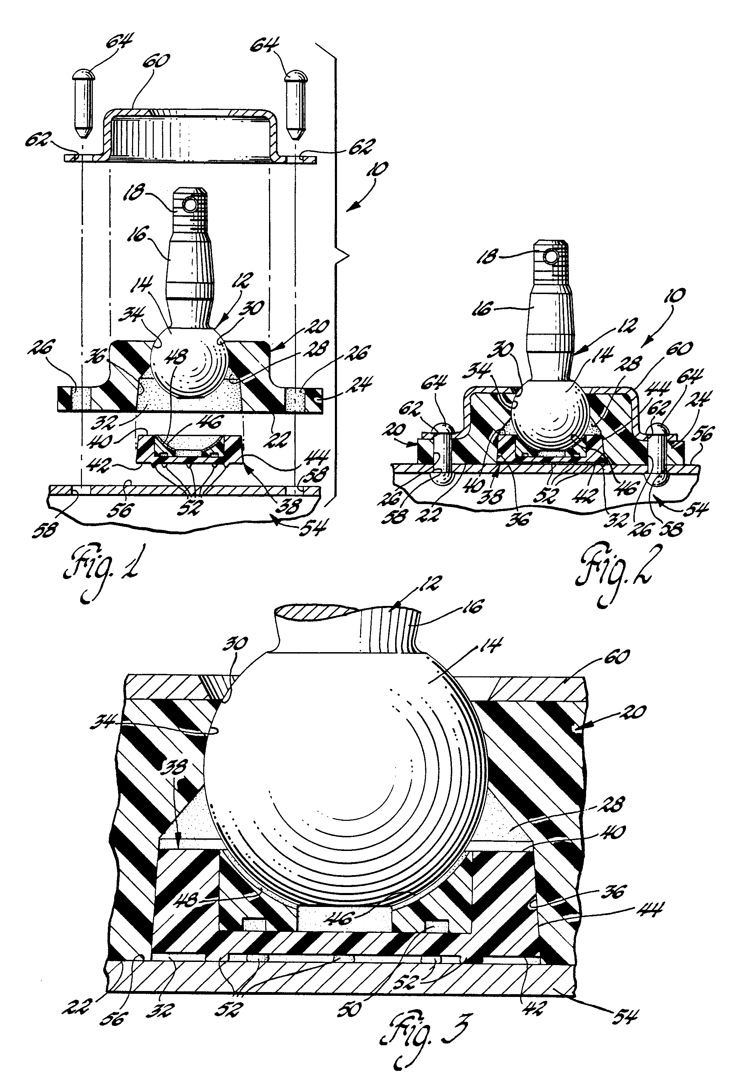

With reference first to Figure 1 of the drawings, the first embodiment of a ball joint in accordance with the present invention is designated generally 10. The ball joint 10 includes a stud designated generally 12 that has a spherical head 14 and a generally cylindrical shank 16 of a diameter smaller than the diameter of the stud head 14. The end of the stud shank 16 is conventionally threaded and apertured at 18 for attachment to a steering knuckle of a vehicle suspension, not illustrated.

A socket designated generally 20 is moulded from acetal plastics material or other suitable material, and is generally cylindrical in shape with a flat lower surface 22 and a peripheral lower flange 24 with four apertures 26 therethrough. The socket 20 is also moulded with a generally centrally located cavity 28 that has a pair of opposed openings thereto, namely a first opening 30 through the top of the socket 20 and a second opening 32 through the lower surface 22. The first opening 30 is large enough to admit the stud shank 16, but not the stud head 14, as is clearly evident from Figure 1. The cavity 28 also includes a first bearing seat 34 that is disposed adjacent the first opening 30 and is engageable with the stud head 14 (and is shown already so engaged). The second opening 32 is larger, being large enough to admit the stud head 14. The cavity 28 also includes a closure surface which is disposed adjacent to and completely around the second opening 32, and in the preferred embodiment is a frustoconical surface 36 that defines the second opening 32 and converges towards the first opening 30.

With further reference to Figure 1, it will be evident that, given the relative sizing of the first and second cavity openings 30 and 32, the stud 12 may be inserted shank 16-first into the socket cavity 28 through the second opening 32 until the stud head 14 engages the first bearing seat 34, with the shank 16 extending through the first opening 30. The first bearing seat 34 wraps around a substantial portion of the upper hemisphere of the stud head 14, which may be referred to as its shank hemisphere. Therefore the shank hemisphere of the stud head 14 will engage the first bearing seat 34 as the stud 12 is inserted, to effectively close the first opening 30 with no further shaping of socket 20. This feature of being able to so close the first opening 30, which provides a travel window for the shank 16, is an advantage of shank-first assembly.

As is disclosed, the first bearing seat 34 also wraps around a small portion of the lower (free) hemisphere of the stud head 14, so that some pressure will be necessary to pop-fit the stud head 14 into the cavity 28. However, the extent of the wrap of the first bearing seat 34 is a matter of design choice.

Whatever is the configuration of the first bearing seat 34, another result of shank-first insertion is the existence of the larger second opening 32, which by the use of the the invention is advantageously filled and sealed, as will now be described.

Again with reference to Figure 1, a cap designated generally 38 is moulded from acetal plastics material with an inset inner side 40, a generally flat outer side 42 and a peripheral frustoconical closure surface 44 extending between the inner and outer sides 40 and 42. The peripheral frustoconical closure surface 44 of the cap matches the frustoconical closure surface 36 of the cavity in shape and slope, and will therefore substantially and closely conform to this surface 36. In this embodiment, also, the inset inner side 40 of the cap 38 also includes a second bearing seat 46 of polyurethane plastics material which is engageable with the free hemisphere of the stud head 14. As is best seen in Figure 3, the second bearing seat 46 also includes lubricant grooves 48 and also an annular groove 50, the depth of which may be varied to vary the resilience of the bearing seat.

A further feature of the cap 38 that appears from Figure I is a plurality of generally cone-shaped protuberances 52 that are moulded integrally with the outer side 42 of the cap, there being eight of these protuberances in this embodiment. The protuberances 52 extend from the outer side 42 of the cap for a predetermined distance, of approximately 1.5 mm, for a purpose which is discussed below.

As may best be seen in Figure 2 of the drawings, once the stud head 14 has been inserted into the cavity 28, the cap 38 can be inserted inner side 40-first into the second opening 32 until the converging matching frustoconical closure surfaces 36 and 44 interengage and the second bearing seat 46 engages the free hemisphere of the stud head 14. The interengagement of the matching frustoconical closure surfaces 36 and 44 and their close conformation serve to seal the second opening 32, thus completing the closure of the cavity 28, to retain lubricant and exclude contaminants.

The depth of insertion of the cap 38 is also controlled by the interengagement of the closure surfaces 36 and 44, thereby controlling the degree of compression of the second bearing seat 46 and establishing a preload of the stud head 14 between the first and second bearing seats 34 and 46. Once the cap 38 has been so inserted, it may be epoxy-bonded or sonically welded in place to provide a separately handled sub-assembly, not illustrated.

Although the outer side 42 of the cap is inset from the lower surface 22 of the socket, the protuberances 52 nevertheless extend past the lower surface 22.

With reference now to Figures 2 and 3 of the drawings, this first embodiment of the ball joint 10 in accordance with the invention is intended to be used, and finds special utility when used, between a steering knuckle, not illustrated, and a control arm, designated generally 54, of a suspension. The control arm 54, which as disclosed is a lower control arm, has a substantially planar upper surface portion 56 with four apertures 58 therethrough which match the socket flange apertures 26. Ball joints typically have a separate cylindrical metal housing that would be mounted through a large aperture in the suspension control arm. In the ball joint in accordance with the invention, however, a housing member to complete the ball joint 10 is conveniently provided by the suspension member control arm 54. Once the cap 38 is in place, a metal cover 60 which generally matches the outside shape of the socket 20 is placed over the socket 20, and four apertures 62 in the cover 60 are aligned with the apertures 26 and 58. In this position, the lower surface 22 of the socket 20 rests on the surface portion 56, and the outer side 42 of the cap 38 faces, and is slightly spaced from, the same surface portion 56. Four rivets 64 are fastened through the aligned apertures 62, 26 and 58 and are headed over, thereby fixing the socket 20 to the control arm 54 and completing the ball joint 10.

Tolerance variations in the manufacture of any or all of the socket 20, stud 12, cap 38 or control arm surface portion 56 may accumulate and result in the outer side 42 of the cap 38 being spaced from the surface portion 56 by a varying amount. Further, a force tending to drive the stud 12 towards the cap 38 would, without some counteracting means, tend to force the cap 38 out of the second opening 32, with the possibility of breaking the weld or the epoxy bond and thereby opening the seal. To accommodate such possible accumulated tolerance variations, the predetermined distance that the deformable protuberances 52 extend from the outer side 42 of the cap is sufficient to ensure that the protuberances 52 will engage, and be deformed by, the surface portion 56 as the socket 20 is riveted in place. Figure 3 clearly shows that deformation has occurred, and room is provided by the spacing of the outer side 42 of the cap for that deformation to occur. The deformation of the protuberances 52 forces the cap 38 towards the first opening 30, whereby in turn the matching frustoconical cavity and cap closure surfaces 36 and 44 are forced into tighter interengagement, since they converge in the direction towards the first opening 30. This tighter interengagement ensures that the seal of the second opening 32 is maintained. In addition, the tighter interengagement of the closure surfaces 36 and 44 serves to maintain the preload of the stud head 14 between the first and second bearing seats 34 and 46. Since the ball joint 10 of this first embodiment has the second bearing seat 32 on the free hemisphere of the stud head 14 and the relatively large first bearing seat surface 34, this particular ball joint is particularly well suited to resisting axial loads on the stud 12 which reverse their direction. Also, the socket 20 has sufficient lateral thickness to well resist lateral loading. The advantages of shank-first insertion are thus achieved, and the potential drawbacks are avoided.

With reference next to Figure 4 of the drawings, the second embodiment of a ball joint in accordance with the invention, designated generally 66, uses an identical form of stud 12, but is assembled by the head-first method. The remaining components, although they are similar to and incorporate the same broad features of the invention as the corresponding components of the first embodiment of the ball joint 10 in accordance with the invention, do have certain differences and are accordingly numbered differently in the interests of clarity. The materials used are the same as in the first embodiment, however, and this and other similarities permit a briefer description.

Specifically, in this second embodiment there is a socket 68 which has the same general shape as the socket 20 of the first embodiment, and has a flat upper surface 70 and an apertured peripheral flange 72. The socket 68, however, has a cavity 74 with only one opening 76 thereinto, which is large enough to admit the stud head 14. The socket 66 is accordingly easier to seal, but it still must be sealed. For that purpose, the cavity 74 also includes a frustoconical closure surface 78 that is disposed adjacent to and completely around the one opening 76 which converges in a direction into the cavity 74. Therefore, the stud 12 may be inserted head-first into the socket cavity 74 through the one opening 76 until the free hemisphere of the stud head 14 engages the inner surface 80 of the cavity 74, with the shank 16 extending out through the one opening 76. The inner surface 80 of the cavity is shaped so as to conform to and engage the free hemisphere of the stud head 14 to provide an upper bearing seat therefor.

With further reference to Figure 4, the cavity opening 76 is also sealed by a cap, designated generally 82, which, in a similar way to the cap 38 in the first embodiment, has opposed inner and outer sides 84 and 86 and a frustoconical peripheral closure surface 88 that substantially conforms to the cavity closure surface 78. Unlike the cap 38 in the first embodiment, however, the cap 82 has an opening 90 therethrough that is large enough to admit the stud shank 16, this opening being defined by a bearing seat surface 92. The bearing seat surface 92 is designed to engage the shank hemisphere of the stud head 14. In this second embodiment, the bearing seat surface 92 is shown as having a circular notch therearound to provide some room for its deformation by the stud head 14, so as to provide better conformation to the stud head 14, although some other surface configuration could alternatively be used.

As in the first embodiment, the outer side 86 of the cap 82 has crushable, deformable protuberances 94 thereon, these protuberances 94 corresponding in number, material and extent to the protuberances 52 in the first embodiment.

The ball joint 66 of this second embodiment also includes a housing member provided by a suspension member, which in this case is an upper control arm 96. A stamped metal cover 98 is sized and apertured similarly to the cover 60 of the first embodiment. However, in the ball joint 66 of this second embodiment, the planar inner surface 100 of the cover 98 has an additional significance, as will be described.

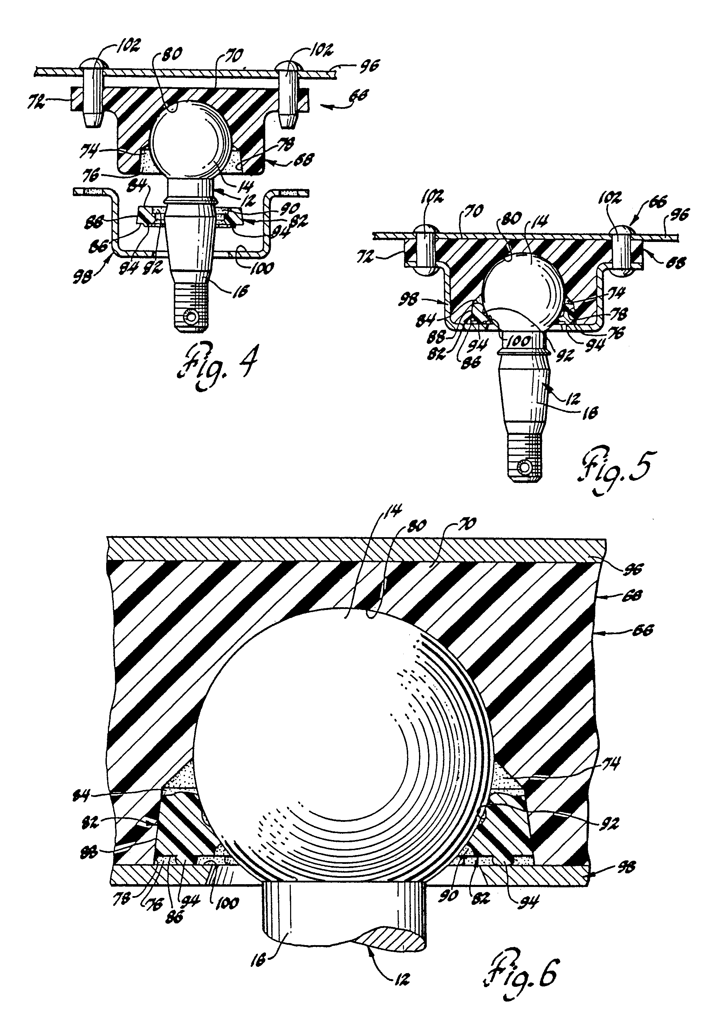

With reference now to Figures 5 and 6, the ball joint 66 of the second embodiment is assembled as follows. After the stud head 14 has been inserted into the cavity 74, the cap 82 is inserted inner side 84-first into the opening 76, with the stud shank 16 passing through the cap opening 90, until the matching frustoconical cap and cavity closure surfaces 88 and 78 interengage, thereby sealing the opening 76. As in the first embodiment 10, the depth of insertion of the cap 82, as determined by the mating of the frustoconical surfaces 88 and 78, also determines how strongly the stud head 14 is preloaded between the inner surface 80 of the cavity 74 and the bearing seat surface 92.

The engagement and slight deformation of the bearing seat surface 92 of the cap 82 by the stud head 14 is best seen in Figure 6. The engagement of the bearing seat surface 92 of the cap, by sealing the cap opening 90, also assists in the sealing of the cavity opening 76. After insertion of the cap 82, the cover 98 is placed over the outside of the socket 68 and attached by means of rivets 102 to the control arm 96, with the upper socket surface 70 disposed against the control arm 96. With this configuration, the outer surface 86 of the cap is spaced, not from the surface of the control arm 96, but from the inner surface 100 of the cover 98. Accordingly, it is the surface 100 which engages and crushes the protuberances 94 to take up any accumulated ·tolerances in the components. As in the ball joint 10 of the first embodiment, that crushing is effective to force the cap 82 into the cavity 74 to back up and ensure the maintenance of the seal by tightening the engagement of the interengaged surfaces, as well as maintaining any desired preload of the stud head 14. The ball joint 66 of this second embodiment, with its single opening 76 and uninterrupted socket 68 above the stud head 14, is particularly well suited to resist loads that tend to compress or force the stud head 14 into the cavity 74.

In both of the embodiments of a ball joint in accordance with the invention which have been described, the matching frustoconical surfaces (36 and 44 in the first embodiment) are forced into tight sealing interengagement, and maintained there, by the engagement of the protuberances with the surface (eg 56) with which they co-operate, the crushing of the protuberances during assembly of the joint being effective to take up any tolerance variations. In the first embodiment, additionally, the forcing of the cap 38 into the socket 20 also co-operatively forces the second bearing seat 46 of the cap 38 into the free hemisphere of the stud head 14, thereby giving a preload.

Variations in the ball joints 10 and 66 disclosed herein may be made within the scope of the claims. For example, the sockets might be made of a yieldable material that would provide enough wrap to the stud head l4 to eliminate the need for one of the bearing seats. However, there would always be an opening to the socket cavity which it would be necessary to seal, even if such opening were of a smaller diameter, and the deformation of the protuberances would still act to maintain that seal. The spacing of the outer side of the cap from the surface portion of either the suspension member or the inner surface of the cover provides a convenient crush space for the protuberances, but such crush space could alternatively be provided by relieved areas in the outer side of the cap at a location around the base of the protuberances.

The control arms to which the ball joint of each embodiment is mounted could be either a lower or an upper control arm, depending on the loading expected, or some other suspension member could alternatively be used.

Also, the closure surfaces could have other shapes, for example they could comprise stepped surfaces. As long as there is substantial conformance and inward convergence of the closure surfaces, the advantages of the invention can be achieved.

**Claims**

1. A ball joint in which a stud (l2) has a head - (l4), a socket (20) has a cavity (28) with an opening (32) so sized as to admit the head (l4) of the stud - (l2), the cavity (28) further includes a closure surface (36) that is disposed adjacent to and completely around the opening (32), a cap (38) has opposed inner (40) and outer (42) sides and a peripheral closure surface (44) that extends between the inner (40) and outer (42) sides and substantially conforms to the closure surface (36) of the cavity (28), whereby the cap (38) may be inserted inner side (40)-first into the opening (32) after the stud (l2) has been inserted into the cavity (28), to thereby interengage the closure surfaces - (44,36) of the cap (38) and cavity (28) to seal the opening (32), and means is provided for securing the cap (38) in position relative to the the closure surface (36) of the cavity (28), characterised in that the closure surface (36) of the cavity (28) converges in a direction into the cavity (28), at least one deformable protuberance (52) extends a predetermined distance from the outer side (42) of the cap (38), a housing member (54) has a surface portion (56), and cover means (60) has a surface portion and is adapted to fix the socket (20) to the housing member (54) after the cap (38) has been inserted into the opening (32) with the outer side - (42) of the cap (38) facing either the surface portion (56) of the housing member (54) or the surface portion of the cover means (60), for completion of the ball joint (l0), the predetermined distance being sufficient to ensure that the protuberance (52) will engage and be deformed by either the surface portion of the cover means (60) or the surface portion (56) of the housing member (54) as the ball joint (l0) is being completed, irrespective of any accumulated tolerance variations in the surface portions of the socket (20), stud (l2), cap (38), cover means (60) and housing member (54) that may result in the outer side (42) of the cap (38) being spaced from the respective surface portions (56) by a varying amount, the deformation acting to force the cap (38) in a direction into the opening - (32), and thereby forcing the converging closure surface (36) of the cavity (28) and the converging closure surface (44) of the cap (38) into tighter interengagement to ensure that the opening (32) remains sealed by the cap (38).

2. A ball joint according to claim l,

characterised in that the stud (l2) also has a shank (l6), the opening (76) in the socket cavity (74) is so sized as to admit the stud head (l4) with the stud shank (l6) extending out of the cavity (74), the cap (82) has an opening (92) therethrough that is large enough to admit the stud shank (l6), and the opening (92) through the cap (82) is defined by a bearing seat surface that is engageable with the stud head (l4), whereby after the stud head (l4) has been inserted into the cavity (74) the cap (82) may be inserted inner side (84)-first into the opening - (92) and over the stud shank (l6), to thereby interengage the stud head (l4) and the bearing seat surface (92), and after the cap (82) has been inserted into the opening (92) the outer side (86) of the cap (82) faces the surface portion (l00) of the cover means (98), to permit engagement and deformation of the protuberance (94) by the surface portion (l00) of the cover means (98) as the ball joint (66) is completed, irrespective of any accumulated tolerance variations that may result in the outer side (86) of the cap (82) being spaced from the surface portion (l00) of the cover means (98) by a varying amount, such deformation of the protuberance (94) thereby forcing the cap bearing seat surface (92) and the stud head (l4) into tighter interengagement.

3. A ball joint according to claim l,

characterised in that the stud (l2) also has a shank (l6), the cavity (28) in the socket (20) has opposed first (30) and second (32) openings, with the first opening (30) being large enough to admit the stud shank (l6) but not the stud head (l4), whereas the second opening (32) is large enough to admit the stud head (l4), the cavity (28) further includes a first bearing seat (34) that is disposed adjacent the first opening (30) and is engagable with the stud head (14), whereby the stud (12) may be inserted shank (16)-first into the cavity (28) through the second opening (32) with the stud shank (16) extending through the first opening (30) and with the stud head (14) engaged with the first bearing seat (34), the closure surface (36) of the cavity (28) is frustoconical and defines the second opening (32), the peripheral closure surface (44) of the cap (38) is frustoconical and generally matches the frustoconical closure surface (36) of the cavity (28), whereby after the stud (12) has been inserted into the cavity (28) the cap (38) may be inserted inner side (40)-first into the second opening (32) until the matching frustoconical closure surfaces (44,36) of the cap (38) and of the cavity (28) interengage to seal the second opening (32), the cap (38) further includes a second bearing seat (46) engageable with the stud head (14) when the cap (38) is so inserted into the second opening (32), to preload the stud head (14) between the first (34) and second (46) bearing seats, and the cover means (60) is adapted to fix the socket (20) to the housing member (54) after the cap (38) has been inserted into the second opening (32) with the outer side (42) of the cap (38) facing the surface portion (56) of the housing member (54), such that there is engagement and deformation of the protuberance (52) by the surface portion (56) of the housing member (54) as the ball joint (10) is completed, irrespective of any accumulated tolerance variations that may result in the outer side (42) of the cap (38) being spaced from the surface portion (56) of the housing member (54) by a varying amount, such deformation acting to force the cap (38) in a direction towards the first opening (30), and thereby forcing the matching frustoconical closure surfaces (44,36) of the cap (38) and cavity (28) into tighter interengagement to ensure that the second opening (32) remains sealed by the cap (38) and to also maintain the preload of the stud head (14) between the first (34) and second (46) bearing seats.

Fig. 1

Fig. 2

Fig. 3

Fig. 4

Fig. 5

Fig. 6